# FASCICULE DE BREVET EUROPEEN

(11) **EP 1 813 826 B1**
(45) Date de publication et mention de la délivrance du brevet: **26.11.2008**
(21) Numéro de dépôt: 07354002.3
(22) Date de dépôt: 09.01.2007
(51) Int. Cl.: F16B 21/07

(54) **Dispositif de liaison amovible comportant une agrafe de verrouillage**
Vorrichtung für eine lösbare Verbindung, die eine Verriegelungsklammer umfasst
Removable linking device comprising a mounting clip

(30) Priorité: 27.01.2006 FR 0600766
(43) Date de publication de la demande: 01.08.2007
(73) Titulaire: Bollhoff Otalu S.A., 73490 La Ravoire (FR)
(72) Inventeur: Berlire, Emmanuelle, 73190 Challes les Eaux (FR); Lejars, Patrick, 73310 Ruffieux (FR)
(74) Mandataire: Hecké, Gérard

(56) Documents cités:
- FR-A- 2 825 425
- US-A1- 2005 191 119

## Description

### Domaine technique de l'invention

L'invention concerne un dispositif de liaison mécanique amovible entre un premier élément de structure et un deuxième élément de structure, comprenant :
- une partie femelle d'accouplement comportant un coussinet sphérique et des moyens de fixation au premier élément de structure,
- une partie mâle d'accouplement muni d'une tête sphérique et de moyens de fixation au deuxième élément de structure, la tête sphérique étant destinée à être mise en place dans le coussinet sphérique.

### État de la technique

De nombreux dispositifs de liaison mécanique de ce type sont connus, par exemple grâce au document FR-A3-2825425. Dans le dispositif décrit dans ce document, une partie d'introduction s'étend à partir de l'ouverture du coussinet sphérique, en forme de cône, et supporte une paroi extérieure tubulaire. Cette dernière entoure à distance le coussinet sphérique.

Dans ce dispositif connu, le coussinet sphérique peut être déformé élastiquement pour permettre l'enclenchement de la tête sphérique en l'enfonçant axialement. Le coussinet sphérique est pourvu d'une cavité en forme de sphère partielle nettement plus grande que la surface d'une demisphère. L'extrémité inférieure de la cavité en forme de sphère partielle présente donc un étranglement. Lors de l'emboîtement, la tête sphérique provoque l'écartement de l'étranglement jusqu'à ce que la tête sphérique s'enclenche dans le coussinet sphérique. La tête sphérique est alors entourée, avec accrochage, par le coussinet sphérique sur plus de la moitié de sa face supérieure. La retenue de la tête sphérique dans le coussinet sphérique est assurée par l'étranglement, à partir duquel s'étend la partie d'introduction généralement en forme de cône pour faciliter le guidage de la tête sphérique avant emboîtement.

Ce dispositif connu est conçu pour permettre un montage et un démontage facile et manuel. Le montage du dispositif est facile car l'effort axial à développer pour l'emboîtement est faible compte tenu de la forte élasticité de la matière constitutive de l'étranglement nécessaire pour autoriser l'emboîtement de la tête sphérique. Et de manière identique, un effort de tirage axial de faible valeur provoque la séparation de la tête sphérique hors du coussinet sphérique.

Or, dans beaucoup d'applications, notamment pour des raisons de sécurité, il est souhaitable de supprimer toute possibilité de démontage du dispositif par un simple tirage manuel.

### Objet de l'invention

L'invention consiste à réaliser un dispositif de liaison mécanique ne présentant pas les inconvénients des dispositifs de l'art antérieur, notamment ne permettant pas un démontage du dispositif par un simple tirage manuel.

Selon l'invention, ce but est atteint par le fait que le dispositif de liaison comporte une agrafe de verrouillage en forme de cavalier, élastique et amovible, positionnée sur le coussinet sphérique et bloquant automatiquement la partie mâle d'accouplement dans la partie femelle d'accouplement lors de l'insertion de la tête sphérique dans le coussinet sphérique.

L'agrafe de verrouillage selon l'invention assure automatiquement le blocage de la partie mâle d'accouplement dans la partie femelle, par retenue de la tête sphérique dans le coussinet sphérique. Quels que soient les efforts de tirage axial appliqué à la partie mâle d'accouplement, l'agrafe de verrouillage exerce une contre-réaction correspondante sur ladite partie mâle, ce qui contribue à fiabiliser complètement le montage. Seule une action sur l'agrafe de verrouillage avec un outil adapté rend possible le démontage du dispositif.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 est une vue en coupe axiale d'un exemple de dispositif de liaison mécanique à l'état monté,
- la figure 2 est une vue de côté de la partie femelle du dispositif de la figure 1,
- la figure 3 est une vue de face de la partie femelle du dispositif de la figure 1,
- la figure 4 est une vue en coupe de la partie femelle du dispositif de la figure 1, suivant le plan de coupe A-A de la figure 2,
- la figure 5 est une vue de dessus de la partie femelle du dispositif de la figure 1,
- la figure 6 est une vue de dessous de la partie femelle du dispositif de la figure 1,
- la figure 7 est une vue en perspective de l'agrafe de verrouillage utilisé dans le dispositif de la figure 1,
- la figure 8 est une vue de dessous de l'agrafe de verrouillage de la figure 7
- la figure 9 est une vue en coupe de la partie femelle du dispositif de la figure 1, suivant le plan de coupe A-A de la figure 2, avec l'agrafe de verrouillage de la figure 7 préassemblée,
- la figure 10 est une vue en coupe axiale du dispositif de la figure 1 avant le montage,
- la figure 11 est une vue en coupe axiale du dispositif de la figure 1 pendant le montage.

### Description de modes particuliers de réalisation

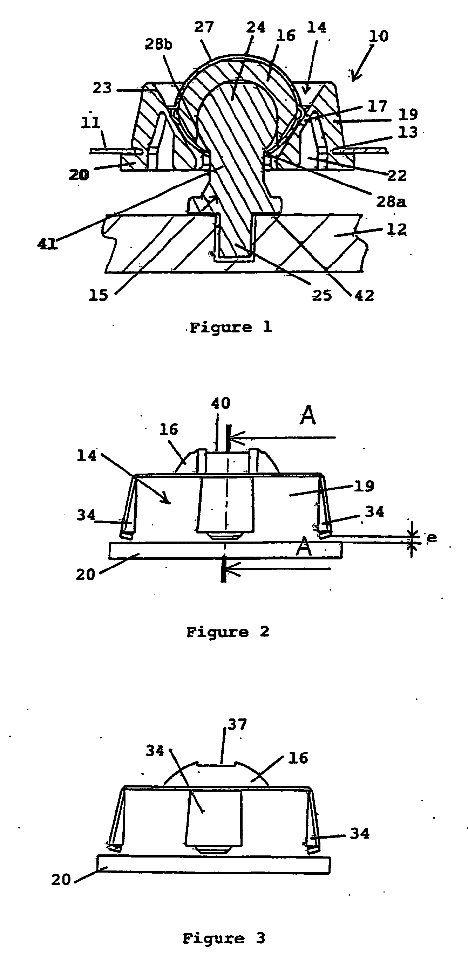

La figure 1 représente un dispositif de liaison mécanique 10 à l'état monté dans lequel il relie entre eux un premier élément de structure 11 et un deuxième élément de structure 12. Les éléments de structure 11 et 12 peuvent être en une matière quelconque, l'élément de structure 11 étant réalisé en forme de plaquette au moins dans la zone de liaison et étant pourvu d'un trou de fixation 13. Le dispositif de liaison mécanique 10 comporte une partie femelle d'accouplement 14 et une partie mâle d'accouplement 15, respectivement reliées d'une manière séparable au premier élément de structure 11 et au deuxième élément de structure 12. La partie femelle d'accouplement 14 est réalisée en une matière possédant des propriétés d'amortissement des vibrations, tandis que la partie mâle d'accouplement 15 est par exemple en une matière plastique renforcée au moyen d'une charge ou en métal.

La partie femelle d'accouplement 14, représentée d'une manière plus précise aux figures 2 à 6, comporte un coussinet sphérique 16 délimitant une cavité 35 avec une ouverture 18 dans sa partie inférieure. Une paroi intermédiaire annulaire 17 s'étend depuis la face extérieure du coussinet sphérique 16. En périphérie de la paroi intermédiaire annulaire 17 s'étend axialement une paroi extérieure tubulaire 19. Une collerette annulaire 20 s'étend depuis le côté inférieur de la paroi extérieure tubulaire 19, en faisant saillie vers l'extérieur dans un plan transversal. La paroi extérieure tubulaire 19 est cylindrique dans l'exemple représenté. Ce mode de réalisation de la partie femelle d'accouplement 14 lui permet de présenter d'excellentes capacités d'absorption des vibrations subies par le coussinet sphérique 16.

Des segments de maintien 34 font saillie radialement de la paroi extérieure tubulaire 19 et sont angulairement répartis suivant un pas constant, ici de 90 degrés. Les segments de maintien 34 sont chanfreinés sur leur face supérieure tournée du côté opposé à la collerette annulaire 20, afin de pouvoir être introduits aisément dans le trou de fixation 13 du premier élément de structure 11. Les segments de maintien 34 sont décalés axialement par rapport à la collerette annulaire 20 suivant un décalage repéré « e » (figure 2). La valeur de « e » est inférieure à l'épaisseur du premier élément de structure 11 dans la zone de liaison.

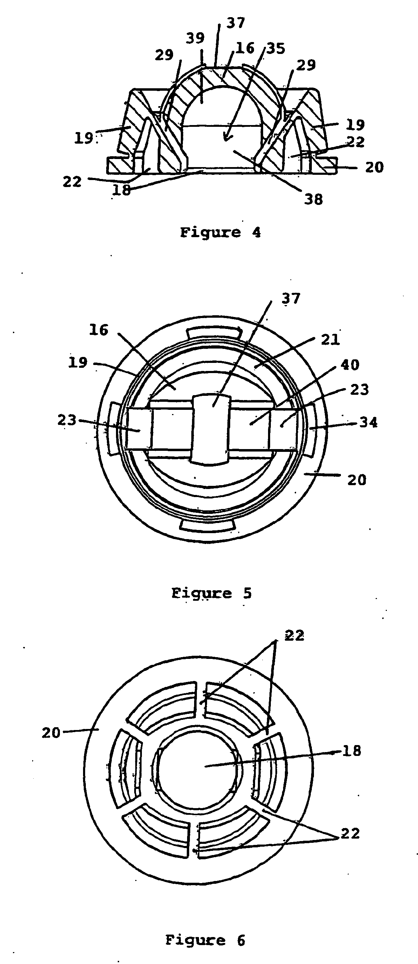

En référence à la figure 5, la paroi intermédiaire annulaire 17 présente principalement un anneau transversal 21 dont le contour intérieur est relié à la surface extérieure du coussinet sphérique 16 et dont le contour extérieur est relié à la surface intérieure de la paroi extérieure tubulaire 19.

Des voiles de renfort 22 s'étendent entre la paroi extérieure tubulaire 19 et le coussinet sphérique 16. Les voiles de renfort 22 sont reliés dans leur partie supérieure à la paroi intermédiaire annulaire 17. Les voiles de renfort 22 assurent, après montage, l'absorption des vibrations dans les directions radiales avec une rigidité suffisante pour empêcher des déplacements intempestifs du coussinet sphérique 16.

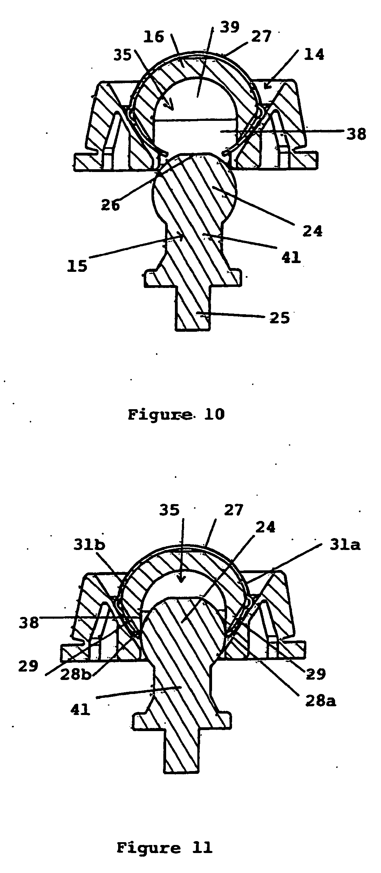

La partie mâle d'accouplement 15 (figure 1) est constituée d'une tête sphérique 24 et de moyens de fixation 25 en forme de tige filetée, qui sont reliés l'un à l'autre par une portion intermédiaire 41 en forme de cylindre dont le diamètre est inférieur à celui de la tête sphérique 24. La tête sphérique 24 est pourvue d'un évidement (non représenté) pratiqué dans un méplat 26 (figure 10) et servant à l'introduction d'un élément d'entraînement. Les moyens de fixation 25 sont vissés dans un alésage fileté correspondant du deuxième élément de structure 12. Il est toutefois évident que la fixation de la partie mâle d'accouplement 15 sur le deuxième élément de structure 12 pourrait être réalisée d'une autre manière.

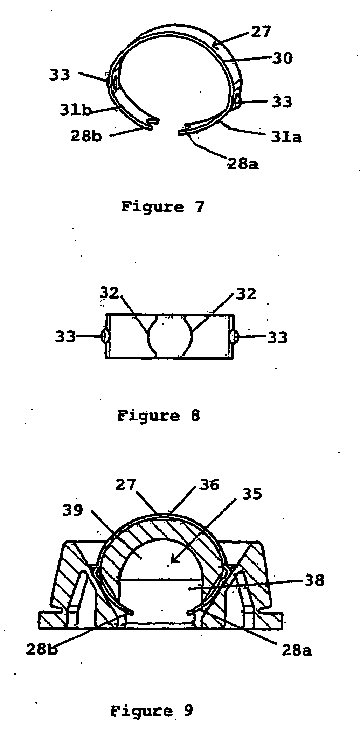

En référence à la figure 1 et aux figures 7 et 8, le dispositif de liaison mécanique 10 comporte une agrafe de verrouillage 27 en forme de cavalier. L'agrafe de verrouillage 27 est positionnée sur le coussinet sphérique 16 et assure le blocage automatique de la partie mâle d'accouplement 15 dans la partie femelle d'accouplement 14 lors de l'insertion de la tête sphérique 24 dans le coussinet sphérique 16. Afin d'autoriser l'insertion des extrémités 28a et 28b de l'agrafe de verrouillage 27 à l'intérieur de la cavité 35 délimitée par le coussinet sphérique 16, deux fentes de guidage 29 opposées sont agencées dans le coussinet sphérique 16 pour assurer la communication entre l'intérieur de la cavité 35 du coussinet sphérique 16 et l'extérieur. Les fentes de guidage 29 sont axialement symétriques et inclinées en direction de l'ouverture 18.

L'agrafe de verrouillage 27 est réalisée par déformation d'une bande rectangulaire 30 de matière élastique, ici du métal, pour constituer deux branches 31 a, 31 b courbes et symétriques. Les petits côtés 32 de la bande 30, constituant les extrémités 28a, 28b de l'agrafe de verrouillage 27, présentent une forme en arc de cercle incurvé vers la bande 30 (figure 8). Chaque branche 31 a, 31 b comporte une protubérance d'appui 33 obtenue par déformation de la matière. Le rôle des protubérances d'appui 33 sera détaillé plus loin.

Pour le montage du dispositif de liaison mécanique 10, l'agrafe de verrouillage 27 est d'abord préassemblée par le dessus avec la partie femelle d'accouplement 14. En écartant les branches 31 a et 31 b de l'agrafe de verrouillage 27, par exemple manuellement, les extrémités 28a et 28b de cette dernière sont insérées dans les fentes de guidage 29. Après sa mise en place, l'agrafe de verrouillage 27 chevauche le coussinet sphérique 16, dans une position d'appui sur la face extérieure du coussinet sphérique 16 où les extrémités 28a, 28b font saillie à l'intérieur de la cavité 35. Au repos, la distance séparant les extrémités 28a, 28b de l'agrafe de verrouillage 27 est inférieure à la distance séparant les entrées des deux fentes de guidage 29. L'agrafe de verrouillage 27 est donc imperdable après sa mise en place sur la partie femelle d'accouplement 14.

Pour faciliter la mise en place de l'agrafe de verrouillage 27, la face inférieure de chaque fente de guidage 29 est prolongée dans sa partie supérieure par un chanfrein 23 pratiqué dans l'anneau transversal 21. Les chanfreins 23 assurent notamment le guidage des branches 31 a, 31 b de l'agrafe de verrouillage 27 avant la pénétration des extrémités 28a, 28b dans les fentes de guidage 29.

Chaque partie femelle 14 et mâle 15 est ensuite reliée à l'élément de structure 11, 12 correspondant. A cet effet, la partie femelle d'accouplement 14 est introduite, par dessous, dans le trou de fixation 13 de l'élément de structure 11. Pendant que le contour du trou de fixation 13 glisse le long de la face supérieure chanfreinée des segments de maintien 34, la paroi extérieure tubulaire 19 se déforme vers l'intérieur. A la fin de l'opération d'introduction, le premier élément de structure 11 s'enclenche entre la collerette annulaire 20 et les segments de maintien 34. Plus précisément, le premier élément de structure 11 est maintenu axialement entre la collerette annulaire 20 et la face inférieure des segments de maintien 34. Comme « e » est inférieure à l'épaisseur du premier élément 11 dans la zone de liaison, la face inférieure des segments de maintien 34 se déforme afin d'assurer une fixation du premier élément 11 sans jeu. La face inférieure des segments de maintien 34 présente une forme pointue lui permettant de s'adapter à différentes épaisseurs de premier élément 11, grâce à une déformation différente appropriée suivant la direction axiale.

La partie mâle d'accouplement 15 est rendue solidaire du deuxième élément de structure 12 par vissage des moyens de fixation 25 dans l'alésage fileté correspondant pratiqué dans ledit élément 12, jusqu'à venir en butée contre un épaulement 42 aménagé à l'extrémité inférieure de la portion intermédiaire 41. Il va de soi que la fixation de la partie mâle d'accouplement 15 sur le deuxième élément de structure peut être réalisée par tout moyen adapté tel que le clipage, la soudure, le sertissage...

Pour assurer le montage du dispositif de liaison mécanique 10, la partie mâle d'accouplement 15 est insérée axialement dans la cavité 35 délimitée par le coussinet sphérique 16, au travers de l'ouverture 18 (figure 10). La cavité 35 comporte une portion cylindrique 38 qui s'étend depuis l'ouverture 18 et qui se prolonge par une portion hémisphérique 39 (figure 10). Le diamètre de la portion cylindrique 38 est supérieur à celui de la tête sphérique 24, de sorte que l'insertion de la partie mâle d'accouplement 15 dans la partie femelle d'accouplement 14 ne provoque aucun frottement entre ces deux pièces. Le montage de la partie mâle d'accouplement 15 dans la partie femelle d'accouplement 14 peut se faire manuellement.

Pendant l'insertion de la partie mâle d'accouplement 15 (figure 11), la tête sphérique 24 entre en contact avec les extrémités 28a, 28b de l'agrafe de verrouillage 27, puis provoque l'écartement des branches 31 a, 31 b par coulissement dans les fentes de guidage 29. Les fentes de guidage 29 débouchent dans la cavité 35 au travers de la paroi de la portion cylindrique 38. Le rappel élastique de resserrement des branches 31 a, 31 b provoque automatiquement le glissement des extrémités 28a, 28b tout le long de la surface extérieure de la tête sphérique 24 jusqu'à venir s'engager autour de la portion intermédiaire 41 dans la zone adjacente à la tête sphérique 24. Dans certaines variantes, une gorge annulaire peut être prévue dans cette zone pour permettre l'engagement par insertion des extrémités 28a, 28b.

A la fin du montage (figure 1), la tête sphérique 24 est en butée contre la portion hémisphérique 39 de la cavité 35 et les extrémités 28a, 28b coopèrent avec la zone de raccordement entre la tête sphérique 24 et la portion intermédiaire 41. Le diamètre des arcs de cercle constitués par les petits côtés 32 de la bande rectangulaire 30 formant l'agrafe de verrouillage 27 correspond à celui du cylindre formant la portion intermédiaire 41. Les extrémités 28a, 28b assurent le blocage positif de la partie mâle d'accouplement 15 dans la partie femelle d'accouplement 14 par retenue de la tête sphérique 24. Quels que soient les efforts de tirage axial appliqué à la partie mâle d'accouplement 15, l'agrafe de verrouillage 27 exerce une contre-réaction correspondante sur ladite partie mâle 15. Ainsi, toute possibilité de démontage du dispositif 10 par action de tirage sur la tête sphérique 16 est supprimée, et ce quel que soit la valeur de l'effort de tirage. Pour assurer une bonne stabilité et une forte rigidité de l'agrafe de verrouillage 27, les protubérances d'appui 33 viennent en contact avec les faces inférieures des fentes de guidage 29. En effet, les protubérances d'appui 33 étant agencées dans la zone médiane des branches 31 a, 31 b, le moment de flexion subi par chaque branche 31 a, 31 b, pour un effort de tirage axial donné, est fortement diminué par rapport à une variante de dispositif de liaison mécanique 10 ne comportant pas de protubérances d'appui 33.

A l'état monté du dispositif de liaison mécanique 10, l'agrafe de verrouillage 27 vient se loger dans une rainure de positionnement 40 pratiquée dans la face extérieure du coussinet sphérique 16, pour assurer son positionnement latéral. La largeur de la rainure de positionnement 40 est légèrement supérieure à celle de la bande rectangulaire 30 formant l'agrafe de verrouillage 27, de sorte à disposer d'un jeu fonctionnel pour la mise en place de l'agrafe de verrouillage 27 sur le coussinet sphérique 16. La rainure de positionnement 40 est réalisée par une diminution de l'épaisseur du coussinet sphérique 16 depuis l'extérieur.

Un méplat 37 (figure 3 à 5) est pratiqué au sommet de la surface extérieure du coussinet sphérique 16. Le niveau du méplat 37 est inférieur à celui du fond de la rainure de positionnement 40. Le méplat 37 constitue donc un évidement 36 (figure 9) accessible depuis l'extérieur et agencé sous l'agrafe de verrouillage 27 lorsqu'elle est logée dans la rainure de positionnement 40. Pour le démontage du dispositif de liaison mécanique 10 précédemment décrit, un outil (non représenté) est introduit dans l'évidement 36 pour appliquer un effort de soulèvement à l'agrafe de verrouillage 27. Dans son mouvement, l'agrafe de verrouillage 27 se soulève du coussinet sphérique 16 et les branches 31 a, 31 b coulissent dans les fentes de guidage 29. Pour un déplacement donné de l'agrafe de verrouillage 27, les extrémités 28a, 28b ne font plus saillie de la première portion 38 et libèrent la partie mâle d'accouplement 15 qui peut donc être retirée librement. Lorsque l'outil est retiré, l'agrafe de verrouillage 27 revient se loger dans la rainure de positionnement 40 par retour élastique. L'outil peut, par exemple, être constitué par l'extrémité d'un tournevis plat. Seule une action sur l'agrafe de verrouillage 27 avec ledit outil rend possible le démontage du dispositif.

L'exemple de réalisation de dispositif de liaison mécanique 10 qui vient d'être décrit n'est qu'un exemple illustratif de l'invention, en aucun limitatif quant à son domaine. Par exemple, pour améliorer l'amortissement axial des vibrations, la paroi intermédiaire annulaire 17 peut présenter, dans un plan de coupe axial, un profil ondulé avec, par exemple, un unique renflement annulaire dirigé axialement. D'autre part, la partie femelle d'accouplement 14 peut être démunie de paroi extérieure tubulaire 19.

## Revendications

1. Dispositif de liaison mécanique (10) amovible entre un premier élément de structure (11) et un deuxième élément de structure (12), comprenant :
- une partie femelle d'accouplement (14) comportant un coussinet sphérique (16) et des moyens de fixation (20, 34) au premier élément de structure (11),
- une partie mâle d'accouplement (15) muni d'une tête sphérique (24) et de moyens de fixation (25) au deuxième élément de structure (12), la tête sphérique (24) étant destinée à être mise en place dans le coussinet sphérique (16),
dispositif (10) **caractérisé en ce qu'**il comporte une agrafe de verrouillage (27) en forme de cavalier, élastique et amovible, positionnée sur le coussinet sphérique (16) et bloquant automatiquement la partie mâle d'accouplement (15) dans la partie femelle d'accouplement (14) lors de l'insertion de la tête sphérique (24) dans le coussinet sphérique (16).

2. Dispositif selon la revendication 1, **caractérisé en ce qu'**il comporte des moyens pour assurer le blocage positif de la partie mâle d'accouplement (15) dans la partie femelle d'accouplement (14) de manière à ce que l'application d'un effort de tirage sur la partie mâle d'accouplement (15) provoque une contre-réaction correspondante de l'agrafe de verrouillage (27) sur ladite partie mâle (15).

3. Dispositif selon l'une des revendications 1 ou 2, **caractérisé en ce que** la face extérieure du coussinet sphérique (16) comporte un évidement (36) agencé sous l'agrafe de verrouillage (27) et accessible depuis l'extérieur.

4. Dispositif selon l'une des revendications 1 à 3, **caractérisé en ce que** le coussinet sphérique (16) de la partie femelle d'accouplement (14) comporte deux fentes de guidage (29) opposées pour l'insertion des extrémités (28a, 28b) de l'agrafe de verrouillage (27).

5. Dispositif selon la revendication 4, **caractérisé en ce que** les fentes de guidage (29) sont inclinées en direction de l'ouverture (18) du coussinet sphérique (16).

6. Dispositif selon l'une des revendications 1 à 5, **caractérisé en ce que** la partie mâle d'accouplement (15) comporte une portion intermédiaire (41) intercalée entre la tête sphérique (24) et les moyens de fixation (25) au deuxième élément de structure (12), ladite portion intermédiaire (41) comprenant une zone d'engagement des extrémités (28a, 28b) de l'agrafe de verrouillage (27).

7. Dispositif selon l'une quelconque des revendications 1 à 6, **caractérisé en ce que** la face extérieure du coussinet sphérique (16) -comporte des moyens de positionnement latéral de l'agrafe de verrouillage (27).

8. Dispositif selon la revendication 7, **caractérisé en ce que** les moyens de positionnement latéral de l'agrafe de verrouillage (27) sont constitués par une rainure de positionnement (41) dans la face extérieure du coussinet sphérique (16).

9. Dispositif selon l'une quelconque des revendications 1 à 8, **caractérisé en ce que** la partie femelle d'accouplement (14) comporte une paroi extérieure tubulaire (19) entourant à distance le coussinet sphérique (16), et une paroi intermédiaire annulaire (17) reliant le coussinet sphérique (16) et ladite paroi extérieure tubulaire (19).

10. Dispositif selon la revendication 9, **caractérisé en ce que** la face extérieure de la paroi extérieure tubulaire (19) comporte, en saillie, une collerette annulaire (20) et des segments de maintien (34) angulairement répartis et décalés axialement par rapport à ladite collerette annulaire (20), constituant les moyens de fixation (20, 34) du premier élément de structure (11).

11. Dispositif selon la revendication 10, **caractérisé en ce que** le décalage axial (e) entre la collerette annulaire (20) et les segments de maintien (34) est inférieur à l'épaisseur du premier élément de structure (11).

12. Dispositif selon l'une des revendications 10 ou 11, **caractérisé en ce que** les segments de maintien (34) sont chanfreinés sur leur face supérieure tournée du côté opposé à la collerette annulaire (20).

13. Dispositif selon l'une quelconque des revendications 9 à 12, **caractérisé en ce que** des voiles de renfort (22) s'étendent radialement entre la paroi extérieure tubulaire (19) et le coussinet sphérique (16).

14. Dispositif selon l'une des revendications 4 à 13, **caractérisé en ce que** l'agrafe de verrouillage (27) comporte deux protubérances d'appui (33) sur la face inférieure de la fente de guidage (29) correspondante.

15. Procédé de démontage d'un dispositif selon l'une des revendications précédentes, **caractérisé en ce que** le soulèvement de l'agrafe de verrouillage (27) par rapport au coussinet sphérique (16) provoque la libération de la partie mâle d'accouplement (15).

## Claims

1. A device for removable mechanical connection (10) between a first structural element (11) and a second structural element (12), comprising:
- a female coupling part (14) comprising a spherical bearing bush (16) and means (20, 34) for fixing to the first structural element (11),
- a male coupling part (15) provided with a spherical head (24) and means (25) for fixing to the second structural element (12), the spherical head (24) being designed to be fitted in the spherical bearing bush (16),
a device (10) **characterized in that** it comprises a latching fastener (27) in the form of a removable flexible rider positioned on the spherical bearing bush (16) and automatically securing the male coupling part (15) in the female coupling part (14) when the spherical head (24) is inserted in the spherical bearing bush (16).

2. The device according to claim 1, **characterized in that** it comprises means for performing positive securing of the male coupling part (15) in the female coupling part (14) so that application of a pulling force on the male coupling part (15) causes a corresponding counter-reaction of the latching fastener (27) on said male part (15).

3. The device according to claim 1 or 2, **characterized in that** the external surface of the spherical bearing bush (16) comprises a recess (36) arranged under the latching fastener (27) and accessible from the outside.

4. The device according to one of claims 1 to 3, **characterized in that** the spherical bearing bush (16) of the female coupling part (14) comprises two opposite guiding slits (29) for insertion of the ends (28a, 28b) of the latching fastener (27).

5. The device according to claim 4, **characterized in that** the guiding slits (29) are inclined in direction of the opening (18) of the spherical bearing bush (16).

6. The device according to one of claims 1 to 5, **characterized in that** the male coupling part (15) comprises an intermediate portion (41) inserted between the spherical head (24) and the means (25) for fixing to the second structural element (12), said intermediate portion (41) comprising an engagement zone of the ends (28a, 28b) of the latching fastener (27).

7. The device according to any one of claims 1 to 6, **characterized in that** the external surface of the spherical bearing bush (16) comprises means for lateral positioning of the latching fastener (27).

8. The device according to claim 7, **characterized in that** the means for lateral positioning of the latching fastener (27) are formed by a positioning groove (41) in the external surface of the spherical bearing bush (16).

9. The device according to any one of claims 1 to 8, **characterized in that** the female coupling part (14) comprises a tubular outside wall (19) surrounding the spherical bearing bush (16) at a distance, and an annular intermediate wall (17) connecting the spherical bearing bush (16) and said tubular outside wall (19).

10. The device according to claim 9, **characterized in that** the external surface of the tubular outside wall (19) comprises a salient annular rim (20) and angularly arranged securing segments (34) axially offset with respect to said annular rim (20), constituting the means (20, 34) for fixing the first structural element (11).

11. The device according to claim 10, **characterized in that** the axial offset (e) between the annular rim (20) and the securing segments (34) is smaller than the thickness of the first structural element (11).

12. The device according to claim 10 or 11, **characterized in that** the securing segments (34) are chamfered on their top surface facing the opposite side to the annular rim (20).

13. The device according to any one of claims 9 to 12, **characterized in that** strengthening webs (22) extend radially between the tubular outside wall (19) and the spherical bearing bush (16).

14. The device according to one of claims 4 to 13, **characterized in that** the latching fastener (27) comprises two bearing protuberances (33) on the inside surface of the corresponding guiding slit (29).

15. A method for removing a device according to one of the foregoing claims, **characterized in that** lifting the latching fastener (27) with respect to the spherical bearing bush (16) causes the male coupling part (15) to be released.

## Patentansprüche

1. Vorrichtung zur mechanischen, lösbaren Verbindung (10) zwischen einem ersten Strukturelement (11) und einem zweiten Strukturelement (12), die umfasst:
- ein weibliches Verbindungsstück (14), das eine kugelförmige Hülse (16) und Mittel (20, 34) zur Befestigung am ersten Strukturelement (11) umfasst,
- ein männliches Verbindungsstück (15), das mit einem kugelförmigen Kopf (24) und Mitteln (25) zur Befestigung am zweiten Strukturelement (12) versehen ist, wobei der kugelförmige Kopf (24) dazu bestimmt ist, in der kugelförmigen Hülse (16) angeordnet zu werden,
Vorrichtung (10), die **dadurch gekennzeichnet ist, dass** sie eine brückenförmige, elastische und abnehmbare Verriegelungsklammer (27) umfasst, die auf der kugelförmigen Hülse (16) positioniert ist und das männliche Verbindungsstück (15) beim Einführen des kugelförmigen Kopfes (24) in die kugelförmige Hülse (16) automatisch im weiblichen Verbindungsstück (14) blockiert.

2. Vorrichtung nach Anspruch 1, **dadurch gekennzeichnet, dass** sie Mittel zum sicheren Blockieren des männlichen Verbindungsstücks (15) im weiblichen Verbindungsstück (14) umfasst, sodass die Anwendung einer Zugkraft auf das männliche Verbindungsstück (15) eine entsprechende Gegenreaktion der Verriegelungsklammer (27) auf diesem männlichen Verbindungsstück (15) nach sich zieht.

3. Vorrichtung nach einem der Ansprüche 1 oder 2, **dadurch gekennzeichnet, dass** die Außenseite der kugelförmigen Hülse (16) eine Aussparung (36) umfasst, die unter der Verriegelungsklammer (27) angeordnet und von außen zugänglich ist.

4. Vorrichtung nach einem der Ansprüche 1 bis 3, **dadurch gekennzeichnet, dass** die kugelförmige Hülse (16) des weiblichen Verbindungsstücks (14) zum Einführen der Enden (28a, 28b) der Verriegelungsklammer (27) zwei einander gegenüberliegende Führungsspalte (29) umfasst.

5. Vorrichtung nach Anspruch 4, **dadurch gekennzeichnet, dass** die Führungsspalte (29) in Richtung auf die Öffnung (18) der kugelförmigen Hülse (16) geneigt sind.

6. Vorrichtung nach einem der Ansprüche 1 bis 5, **dadurch gekennzeichnet, dass** das männliche Verbindungsstück (15) einen Zwischenbereich (41) umfasst, der zwischen dem kugelförmigen Kopf (24) und den Mitteln (25) zur Befestigung am zweiten Strukturelement (12) vorgesehen ist, welcher Zwischenbereich (41) eine Einführungszone für die Enden (28a, 28b) der Verriegelungsklammer (27) umfasst.

7. Vorrichtung nach einem der Ansprüche 1 bis 6, **dadurch gekennzeichnet, dass** die Außenseite der kugelförmigen Hülse (16) Mittel zum seitlichen Positionieren der Verriegelungsklammer (27) umfasst.

8. Vorrichtung nach Anspruch 7, **dadurch gekennzeichnet, dass** die Mittel zum seitlichen Positionieren der Verriegelungsklammer (27) von einer Positionierungsnut (41) in der Außenseite der kugelförmigen Hülse (16) gebildet werden.

9. Vorrichtung nach einem der Ansprüche 1 bis 8, **dadurch gekennzeichnet, dass** das weibliche Verbindungsstück (14) eine röhrenförmige Außenwand (19), die die kugelförmige Hülse (16) in Abstand umgibt, und eine ringförmige Zwischenwand (17) umfasst, die die kugelförmige Hülse (16) und die röhrenförmige Außenwand (19) miteinander verbindet.

10. Vorrichtung nach Anspruch 9, **dadurch gekennzeichnet, dass** die Außenseite der röhrenförmigen Außenwand (19) hervorspringend einen ringförmigen Kragen (20) sowie Haltestücke (34) umfasst, die bezüglich dem ringförmigen Kragen (20) winklig verteilt und axial versetzt angeordnet sind und die Mittel zur Befestigung (20, 34) des ersten Strukturelements (11) bilden.

11. Vorrichtung nach Anspruch 10, **dadurch gekennzeichnet, dass** der Axialabstand (e) zwischen dem ringförmigen Kragen (20) und den Haltestücken (34) geringer ist als die Dicke des ersten Strukturelements (11).

12. Vorrichtung nach einem der Ansprüche 10 oder 11, **dadurch gekennzeichnet, dass** die Haltestücke (34) an ihrer Oberseite abgeschrägt sind, die zu der dem ringförmigen Kragen (20) entgegengesetzten Seite weist.

13. Vorrichtung nach einem der Ansprüche 9 bis 12, **dadurch gekennzeichnet, dass** sich zwischen der röhrenförmigen Außenwand (19) und der kugelförmigen Hülse (16) Verstärkungsvliese (22) radial erstrecken.

14. Vorrichtung nach einem der Ansprüche 4 bis 13, **dadurch gekennzeichnet, dass** die Verriegelungsklammer (27) an der unteren Seite des entsprechenden Führungsspalts (29) zwei Auflage-Ausstülpungen (33) umfasst.

15. Verfahren zum Demontieren einer Vorrichtung nach einem der vorstehenden Ansprüche, **dadurch gekennzeichnet, dass** das Abheben der Verriegelungsklammer (27) bezüglich der kugelförmigen Hülse (16) die Freigabe des männlichen Verbindungsstücks (15) bewirkt.
